Europäisches Patentamt

European Patent Office

Office européen des brevets

(11) Veröffentlichungsnummer: **0 359 120**
**A2**

## (12) EUROPÄISCHE PATENTANMELDUNG

(21) Anmeldenummer: 89116518.5

(22) Anmeldetag: 07.09.89

(51) Int. Cl.5: **C08G 63/60 , C09K 19/38**

(30) Priorität: 15.09.88 DE 3831328

(43) Veröffentlichungstag der Anmeldung:
21.03.90 Patentblatt 90/12

(84) Benannte Vertragsstaaten:
**BE DE FR GB NL SE**

(71) Anmelder: BASF Aktiengesellschaft
Carl-Bosch-Strasse 38
D-6700 Ludwigshafen(DE)

(72) Erfinder: Rosenau, Bernhard, Dr.
Schmale Gasse 4
D-6932 Hirschhorn(DE)
Erfinder: Hisgen, Bernd, Dr.
Goethestrasse 6
D-6703 Limburgerhof(DE)
Erfinder: Heinz, Gerhard, Dr.
Im Vogelsang 2
D-6719 Weisenheim am Berg(DE)
Erfinder: Zeiner, Hartmut, Dr.
Paracelsusstrasse 18
D-6700 Ludwigshafen(DE)

(54) Thermotrope Polyester auf der Grundlage von Adipinsäure.

(57) Thermotrope Polyester auf der Grundlage von Adipinsäure, einem aromatischen Diol und einer aromatischen Hydroxycarbonsäure, aufgebaut aus

15 - 40 Mol.% Einheiten (I) eines oder mehrerer aromatischer Diole,

15 - 40 Mol.% Einheiten (II) Adipinsäure

20 - 70 Mol.% Einheiten (III) einer oder mehrerer aromatischer Hydroxycarbonsäuren,

wobei das Molverhältnis der Einheiten (I) zu den Einheiten (II) zwischen 0,9 : 1 und 1,1 : 1 liegt, und deren Verwendung zur Herstellung von Formkörpern oder Beschichtungen.

# Thermotrope Polyester auf der Grundlage von Adipinsäure

Unter thermotropen Polymeren versteht man insbesondere solche teil- oder vollaromatischen flüssigkristallinen Polyester oder flüssigkristallinen Polyesteramide, die eine anisotrope Schmelze bilden. Eine Reihe chemisch verschiedener vollaromatischer flüssigkristallinen Polymeren sind unter anderem bekannt durch folgende Patentschriften bzw. -anmeldungen:

US-PS 3 991 014,
US-PS 4 370 466,
US-PS 4 156 070,
US-PS 4 181 792,
US-PS 4 614 790,
US-PS 4 161 470,
US-PS 4 351 918,
EP-S 139 303,
EP-A 230 545 und
EP-A 226 839

Formkörper aus flüssigkristallinen Polymeren (LC-Polymeren) zeichnen sich durch einen anisotropen Aufbau aus; die Längsachsen der Polymermoleküle können im Verarbeitungsschritt orientiert werden, was zu Formteilen von ausgezeichneter Steifigkeit, Zähigkeit und hohen Elastizitätsmoduli besonders in Verarbeitungsrichtung führt.

Des weiteren zeichnen sich die flüssigkristallinen Polymeren durch sehr geringe, von den angewandten Scherkräften abhängige Schmelzeviskositäten (wichtig für die Verarbeitung) sowie durch geringe, im Verarbeitungsschritt einstellbare thermische Längenausdehnungskoeffizienten aus. Letzteres ist besonders vorteilhaft für Anwendungen in Kombination mit Metallen oder Glas, z.B. in der Glasfaseroptik zur Beschichtung optischer Fasern und zur Herstellung von Präzisionssteckverbindungen für solche Fasern.

Die für LC-Polymere charakteristische optisch anisotrope Schmelze kann u.a. durch Untersuchung der Schmelzen zwischen gekreuzten Polarisatoren, durch das optische Verhalten bei Scherung ("Scheropaleszenz") sowie durch die stark scherungsabhängigen Schmelzeviskositäten nachgewiesen werden.

Bedingt durch den stark anisotropen Aufbau sind Formteile aus LCP allerdings empfindlich schon gegen relativ geringe Biegebanspruchungen; ihr Bruchverhalten erinnert an das von Holz.

Diese Biegeempfindlichkeit ist eines der Haupthindernisse für die Anwendung von LC-Polymeren zur Beschichtung optischer Glasfasern, wofür sie insbesondere aufgrund ihrer guten Festigkeitseigenschaften und der erwähnten niedrigen linearen thermischen Ausdehnungskoeffizienten gut geeignet wären.

Aufgabe der Erfindung ist die Bereitstellung biegeunempfindlicher teilaliphatischer thermotroper Polyester mit verringerter Biegeempfindlichkeit, die aus leicht verfügbaren Monomeren auf einfache Weise herstellbar sein sollen.

Die US-PS 3 804 805 beschreibt Polyester, die durch Modifikation von Polyethylenterephthalat mittels p-Acetoxybenzoesäure entstehen, also Einheiten eines aliphatischen Diols enthalten. Diese Polyester werden durch ein zweistufiges Verfahren hergestellt, wobei aus der verwendeten p-Acetoxybenzoesäure Blöcke verschiedener Länge gebildet werden. Diese Tatsache ist zur Erklärung der schlechten Reproduzierbarkeit der Eigenschaften solcher Polyester herangezogen worden (vgl. z.B. L. Quach, W. Volksen, R. Herbold und J. Economy, Polym. Prepr. 27, 307-8 (1986)).

Die US-PS 4 390 681 offenbart Copolyester aus Einheiten von p-Hydroxybenzoesäure, Hydrochinon, linearen aliphatischen Dicarbonsäuren mit 6 - 10 Methylengruppen zwischen den Säuregruppen, wobei Azelainsäure (7 $CH_2$-Gruppen) bevorzugt wird, sowie ggf. von aromatischen Dicarbonsäuren.

Die US-PS 4 311 824 beschreibt teilaromatische Polyester aus Einheiten von zum Teil substituiertem Hydrochinon und ggf. anderen aromatischen Diolen und Dicarbonsäuren mit 3 - 10 Methylengruppen zwischen den Carboxylgruppen, zum anderen Teil von bestimmten cycloaliphatischen oder aromatischen Dicarbonsäuren herleiten.

Strzelecki und Liebert (Eur. Polym. J. 17, 127-9 (1981)) beschreiben die Synthese von Polyestern aus aliphatischen Dicarbonsäuren mit 3 - 12, 14 und 20 Methylengruppen zwischen den Carboxylgruppen sowie 4, 4'-Bis-(acetoxy)phenylbenzoat, wodurch zwar nominell Polyester aus der aliphatischen Dicarbonsäure, p-Hydroxybenzoesäure und Hydrochinon im Verhältnis 1 : 1 : 1 entstehen, die sich allerdings durch geordente Sequenzen entlang der Kette auszeichnen. Dies kann u.a. durch Kernresonanzspetroskopie nachgewiesen werden (Merienne, Liebert und Strzelecki, Eur. Polym. J. 18, 137-40 (1982)).

US-PS 4 140 846 beschreibt Polyester mit Einheiten von 4-Carboxyphenylpropionsäure, Hydrochinon und p-Hydroxybenzoesäure.

US-PS 3 991 013 beschreibt Polyester aus (teilweise substituiertem) Hydrochinon, Ethylendioxy-4,4'-dibenzoesäure und weiteren Dicarbonsäuren.

US-PS 4 075 262 beschreibt Polyester aus Einheiten von Ethylenglykol, Terephthalsäure und bestimmten substituierten Hydrochinonen oder Dihydroxybiphenylen.

Es wurde nun gefunden, daß teilaliphatische

thermotrope Polyester, die aufgebaut sind aus Einheiten I, abgeleitet von aromatischen Diolen (z.B. Hydrochinon, 1,4-, 1,5-, 2,6-, oder 2,7-Dihydroxynaphthalin, 4,4'-Dihydroxybiphenyl oder Mischungen der genannten Diole), Einheiten II, abgeleitet von Adipinsäure, und Einheiten III, abgeleitet von aromatischen Hydroxycarbonsäuren (z.B. 4-Hydroxybenzoesäure, 1,4-, 1,5-, 2,6- oder 2,7-Hydroxynaphthalincarbonsäure, 4'-Hydroxydiphenyl-4-carbonsäure oder Mischungen der genannten Hydroxycarbonsäuren) die die Einheiten III in einem Anteil von 20 - 70 Mol.% und die Einheiten I und II in Anteilen von je 15 - 40 Mol.% enthalten, wobei das Molverhältnis von I und II zwischen 0,91 : 1 und 1,1 : 1 liegt und die Einheiten I - III in statistischer Verteilung angeordnet sind, einerseits die für thermotrope Polyester allgemein typischen niedrigen, stark scherungsabhängigen Schmelzeviskositäten und damit ausgezeichnete Verarbeitbarkeit aus der Schmelze sowie niedrige thermischen Ausdehnungskoeffizienten aufweisen. Andererseits zeigen sie eine gewisse Verformbarkeit bei Biegebeanspruchung, ohne zu brechen.

Die erfindungsgemäßen Polyester zeichnen sich aus durch inhärente Viskositäten von mindestens 0,75 dl/g, gemessen in 0,1-%iger (Gew./Vol.) Pentafluorphenollösung bei 60°C. Besonders geeignet sind inhärente Viskositäten von 1,0 bis 2,5 dl/g.

Durch ihre Kombination vorteilhafter Eigenschaften sind die erfindungsgemäßen Polyester auch nützliche Komponenten für Blends mit anderen Polymeren. Solche Blends enthalten vorteilhafterweise 5 - 100 Gew.-% der erfindungsgemäßen Polyester und bis zu 95 % eines oder mehrerer anderer Polymerer. Hierbei kann es vorteilhaft sein, bis zu 60 Gew.-%, bezogen auf die Gesamtmenge der genannten Polymeren, an pulver- oder faserförmigen Füll- und Verstärkungsmitteln zuzusetzen. Des weiteren können übliche Schmier-, Entformungs- und Farbmittel zugesetzt werden.

Beispiel 1

852 g (30,8 Molteile) Adipinsäure, 1164 g (30,8 Molteile) 1,4-Diacetoxybenzol und 1358 g (38,4 Molteile) 4-Acetoxybenzoesäure wurden in Gegenwart von je 0,1 % Zinkacetat und Antimontrioxid bei 150°C aufgeschmolzen. Man heize innerhalb 1,5 h auf 190°C und hielt 3,5 h bei dieser Temperatur, wobei Essigsäure abdestillierte. Dann wurde auf 220°C aufgeheizt und sukzessive Vakuum angelegt. Nach 7 h wurde das Produkt durch eine Bodendüse ausgedrückt und granuliert. Man erhielt ein hellbraunes, fadenziehendes Polymeres, das ohne zu brechen gebogen werden kann.

Das Produkt gibt einen positiven Scheropaleszenztest.

Die inhärente Viskosität beträgt 1,11 dl/g, gemessen in 0,1 %iger (Gew./Vol) Pentafluorphenollösung bei 60°C; sie kann durch Tempern auf 2,01 dl/g gesteigert werden. Beim Biegeversuch nach DIN 53452 brechen die Prüfkörper nicht. Der lineare thermische Ausdehnungskoeffizient, gemessen an Normkleinstäben, betrug bei 20°C -26·10⁻⁶ K⁻¹.

Beispiel 2

Je 0,2 Mol Adipinsäure, p-Acetoxybenzoesäure und 1,4-Diacetoxybenzol wurden in Gegenwart von je 0,1 % Zinkacetat und Antimontrioxid bei 190°C aufgeschmolzen und innerhalb 4 h auf 240°C geheizt, wobei Essigsäure abdestillierte. Dann wurde für insgesamt 2,5 h Vakuum angelegt, wobei ein Endvakuum von 0,3 mbar erreicht wurde.

Die erhaltene hellbraune Polymerschmelze zeigt starke Scheropaleszenz. Das Produkt zeichnet sich nach Erkalten durch eine glatte, glänzende Oberfläche aus und zeigt elastische Verformbarkeit, ohne zu brechen.

Die inhärente Viskosität beträgt 1,03 dl/g.

Beispiel 3

Je 0,2 Mol Adipinsäure und 1,4-Diacetoxybenzol sowie 0,25 Mol 4-Acetoxybenzoesäure wurden in Gegenwart von je 0,1 % Zinkacetat und Antimontrioxid wie in Beispiel 2 beschrieben umgesetzt. Das erhaltene beigefarbene Polymere hatte eine inhärente Viskosität von 1,06 dl/g. Es verhält sich beim Biegen hochelastisch, zieht Faden und weist eine glatte, glänzende Oberfläche auf.

Beispiel 4

0,2 Mol Hydrochinon und 0,3 Mol 4-Hydroxybenzoesäure wurden mit 0,77 Mol Essigsäureanhydrid 1,5 h in einem Bad von 150°C erhitzt; hierbei destillierte Essigsäure ab. Dann wurden 0,2 Mol Adipinsäure und je 0,1 % Mangan(II)acetat und Antimontrioxid zugegeben und die Badtemperatur innerhalb 2 h auf 220°C gesteigert. Schließlich wurde noch 3,5 h bei 230 - 240°C im Vakuum gerührt. Man erhielt ein hellbeiges, bruchfestes, elastisch verformbares flüssigkristallines Polymeres mit der inhärenten Viskosität 0,78 dl/g.

Beispiel 5

Je 0,2 Mol Adipinsäure und Trimethylhydrochinon sowie 0.3 Mol 4-Hydroxybenzoesäure wurden mit 0.84 Mol Essigsäureanhydrid innerhalb von 3h von 150 auf 250°C erhitzt. Dann wurde während 2 h bei 250°C von Atmosphärendruck auf 10 mbar evakuiert und für weitere 2 h bei 250°C unter 1 mbar weitergerührt. Man erhielt ein fadenziehendes, hellbraunes flüssigkristallines Polymeres mit der inhärenten Viskosität 1,02 dl.g.

Beispiel 6

Je 0,15 Mol 1,4-Diacetoxybenzol und Adipinsäure sowie 0.3 Mol 6-Acetoxy-2-naphthoesäure wurden in Gegenwart von je 0,1 % Zinkacetat und Antimontrioxid der Schmelzekondensation unter den in Bsp. 2 genannten Bedingungen unterworfen. Man erhielt eine geschmeidige, stark scheropaleszente, fadenziehende Polymerschmelze. Der erstarrte Polyester ließ sich ohne Bruch elastisch verformen, seine inhärente Viskosität betrug 0,88 dl/g.

## Ansprüche

1. Thermotroper Polyester auf der Grundlage von Adipinsäure, einem aromatischen Diol und einer aromatischen Hydroxycarbonsäure, aufgebaut aus

15 - 40 Mol.% Einheiten (I) eines oder mehrerer aromatischer Diole,
15 - 40 Mol.% Einheiten (II) Adipinsäure
20 - 70 Mol.% Einheiten (III) einer oder mehrerer aromatischer Hydroxycarbonsäuren,
wobei das Molverhältnis der Einheiten (I) zu den Einheiten (II) zwischen 0,9 : 1 und 1,1 : 1 liegt und die Einheiten (I), (II) und (III) in statistischer Verteilung angeordnet sind.

2. Polyester nach Anspruch 1, aufgebaut aus 20 - 35 Mol.% Einheiten I, 20 - 35 Mol.% Einheiten II und 30 - 60 Mol.% Einheiten III.

3. Polyester nach Anspruch 1, enthaltend 28 - 34 Mol.% Einheiten I, 28 - 34 Mol.% Einheiten II und 32 - 44 Mol.% Einheiten II.

4. Polyester nach einem der Ansprüche 1 - 3, mit der Maßgabe, daß mindestens 80 % der Einheiten I von Hydrochinon hergeleitet sind.

5. Polyester nach einem der Ansprüche 1 - 4, mit der Maßgabe, daß mindestens 80 % der Einheiten (III) von 4-Hydroxybenzoesäure hergeleitet sind.

6. Polyester nach einem der Ansprüche 1 - 5 mit einem Schmelzpunkt unter 280°C.

7. Thermoplastische Formmasse, enthaltend
    a) 5 - 100 Gew.-% eines thermotropen Polyesters nach einem der Ansprüche 1 - 6 und
    b) 0 - 95 Gew.-%, bezogen auf das Gesamtgewicht von a) und b), anderer Polymerer.

8. Thermoplastische Formmasse nach Anspruch 7, enthaltend bis zu 60 Gew.-% bezogen auf die Summe der polymeren Bestandteile, an pulver- oder faserförmigen Füll- und Verstärkungsstoffen.

9. Verwendung eines Polyesters bzw.einer Formmasse nach einem der Ansprüche 1 - 8 zur Herstellung von Formkörpern oder Beschichtungen.